# DEMANDE DE BREVET EUROPEEN

(11) **EP 0 883 201 A1**
(43) Date de publication de la demande: **09.12.1998**
(21) Numéro de dépôt: 98201067.0
(22) Date de dépôt: 07.04.1998
(51) Int. Cl.: H01M 4/74, H01M 4/80

(54) **Nouveau produit utilisable comme support d'électrode de batterie, du type à structure textile**

(30) Priorité: 11.04.1997 FR 9704578
(71) Demandeur: Leichle, Guy, 36200 Argenton sur Creuse (FR)
(72) Inventeur: Leichle, Guy, 36200 Argenton sur Creuse (FR)
(74) Mandataire: Richebourg, Michel François

(57) **Abrégé**

L'invention concerne le secteur des batteries électriques et plus précisément celui des supports de matière active de ces batteries.

L'invention propose un produit textile, tissé ou tricoté, comportant ou incorporant du nickel. On peut utiliser un fil de nickel ou un fil textile par exemple de viscose revêtu d'une mince couche de nickel.

Nombreux avantages par rapport aux solutions "mousse", tels que meilleure homogénéité, meilleure définition de la géométrie, meilleure optimisation des paramètres, par exemple dimension de pores. Applications aux batteries rechargeables de tous types, du portable à l'industrie automobile.

## Description

La présente invention concerne le secteur technique des batteries électriques rechargeables et plus précisément celui des supports de matière active de ces batteries.

L'invention propose un nouveau produit textile, de fibres continues, notamment tissé ou tricoté, comportant ou incorporant du métal, notamment du nickel. On peut utiliser un fil ou un trait métallique, notamment de nickel, ou un fil textile par exemple de viscose revêtu d'une mince couche de nickel, ou encore des fils composites. On peut utiliser en particulier un trait réalisé à partir d'un dépôt métallique sur un film synthétique, par exemple un dépôt de nickel sur un film de polyéthylène.

L'industrie de l'énergie portable a connu, avec l'utilisation des équipements portables, un brusque essor, qui se poursuit, et avec elle les besoins en batteries rechargeables de tous types, depuis les batteries pour montre bracelet ou pour téléphones et autres dispositifs portables jusqu'aux batteries de démarrage pour l'industrie automobile et à la traction de véhicule automobiles. Ceci nécessite de la part de cette industrie une production de qualité, performances et quantités constamment croissantes, et de coût constamment en baisse.

Les formats de ces équipements couvrent toute la gamme de la pile " bouton " jusqu'aux éléments de grandes dimensions.

On connaît aujourd'hui trois couples électrochimiques principaux : Nickel-Cadmium, Nickel-Métal Hydrure, Lithium Ion.

Le problème résolu par l'invention est d'améliorer de manière extrêmement significative les performances, le coût et la mise en oeuvre des supports d'électrode, et donc les performances des batteries elles-mêmes.

Plus précisément, l'invention permet de réaliser un support d'électrode défini, géométriquement reproductible, et qui permette de répondre de façon indépendante aux différentes fonctions exigées d'un support.

Le squelette d'électrode doit laisser dans le volume de l'électrode un volume suffisant pour la matière active électrochimique, pouvoir être rempli par cette matière, constituée de poudres ou de pâtes contenant des particules, être électrochimiquement neutre, c'est-à-dire ne pas perturber la réaction électrochimique ni présenter de risques de court-circuit avec son électrode soeur; il doit également maintenir la matière active le plus longtemps possible dans un état et une forme qui permettent un fonctionnement optimum de la batterie; il doit aussi drainer et collecter efficacement les électrons et favoriser leur transfert; Enfin, il doit être le moins onéreux possible et être de manipulation industrielle aussi simple et pratique que possible.

On a utilisé initialement un frittage de poudre de nickel sur un feuillard de nickel, dans le cas d'une électrode d'hydroxyde de nickel. L'état de la technique est maintenant représenté par une mousse de polyuréthanne à laquelle on fait subir une métallisation, notamment au nickel, ce qui conduit à une "mousse de nickel " ( EP 0 522 927 ) (EP 0 717 120).

L'art antérieur est également représenté par l'emploi de feuilles poreuses métalliques ( EP 0 392 082) (EP 0 717 457) (EP 0 710 995) ou de résines poreuses (EP 0 721 994).

La performance des batteries en a été améliorée.

On a utilisé des feuilles non-tissées superposées (EP 0 392 082 et EP 0 717 457 ) qui ne sont pas comparables, ni par leur procédé d'obtention ni par leurs propriétés, à une structure textile obtenue par exemple par tissage ou tricotage. Le terme " non-tissé " est à cet égard explicite.

La solution mousse de PUR-Nickel ( "mousse de nickel") comporte encore de nombreux inconvénients, comme notamment un manque d'homogénéité, une grande difficulté à définir précisément la géométrie du produit, et les difficultés pratiques pour obtenir industriellement une mousse garantissant l'obtention de paramètres importants, comme la dimension des pores etc....; en pratique, la mousse de PUR-Ni a permis des gains et répond à certains critères comme un volume suffisant pour la matière active, la neutralité électrochimique, et un bon drainage des électrons. Cependant, les autres paramètres importants ne peuvent pas, en pratique, être optimisés, en raison des difficultés de définition qui interdisent cette optimisation; par ailleurs, le fait de disposer d'une masse de structure identique ne permet pas de travailler indépendamment sur les différentes fonctions du squelette.

Il existe donc un besoin en un support de matière active pour électrode de batterie rechargeable, qui permette aux techniques des batteries de suivre l'évolution technologique très rapide des appareils alimentés par ces batteries, notamment en matière de temps de charge, capacité, poids, compacité, prix et considérations analogues.

L'invention propose de manière générale d'utiliser un support d'électrode qui possède une structure de nature textile, c'est-à-dire une approche radicalement différente de celle adoptée dans l'art antérieur.

Selon l'invention, la structure textile comporte ou contient l'élément actif nécessaire, c'est-à-dire le nickel dans un exemple de réalisation particulièrement préféré mais non limitatif.

Par élément actif, on entend un élément électrochimiquement neutre mais présentant des propriétés comme le bon drainage des électrons.

Cette disposition originale permet de construire un squelette dans lequel les fonctions de tenue de matière active, de drainage d'électrons, de collecte de ces électrons peuvent être résolues de manière indépendante. L'invention permet donc pour la première fois une optimisation des performances.

L'invention concerne donc un produit utilisable comme support d'électrode de batterie, caractérisé en ce qu'il consiste en un produit textile obtenu à partir d'un fil d'au moins un élément actif, ou d'un fil ou d'une fibre textile revêtu d'au moins un tel élément, ou de composites obtenus à partir de tels fils et/ ou fibres.

Sous une forme préférée, l'invention concerne un tel produit caractérisé par le fait qu'il consiste en un produit textile obtenu à partir de fils eux-mêmes obtenus à partir de fils obtenus par voie métallurgique ou électrochimique.

L'invention concerne également le procédé de fabrication de ces produits par voie textile, ainsi que les supports de matière active pour batterie ainsi obtenus, et les batteries comportant au moins un tel support.

Selon un mode de mise en oeuvre important de l'invention, on réalise une structure textile dite 〈〈 en trois dimensions 〉〉 ou 〈〈 volumique 〉〉.

Des exemples représentatifs et non limitatifs sont le tissage velours, le tissage volumique, le tricotage double fonte. A partir de ces exemples, l'homme de métier saura envisager les techniques équivalentes applicables au principe général de l'invention.

L'invention concerne donc le procédé comportant au moins une telle opération, et les produits 〈〈 volumiques 〉〉 résultants, dont la structure même est originale dans cette application de supports d'électrode.

L'homme de métier comprendra que l'invention porte tout particulièrement sur l'utilisation de fils et/ou fibres en tissage ou tricotage 3 dimensions, et de préférence de manière non homogène, ce qui optimise de manière inattendue les trois fonctions du support.

Le produit textile selon l'invention peut être par exemple obtenu à partir de fil métallique ( par exemple de nickel pour une électrode d'hydroxyde de nickel ) mis en oeuvre seul ou après avoir réalisé un fil composé de plusieurs brins intégrant ou non un autre matériau actif électrochimiquement neutre ou non.

On a pu également opérer à partir d'un fil textile, comme par exemple de viscose, ou matériau analogue se prêtant aux opérations du textile, revêtu électrochimiquement d'une couche de métal ( notamment de nickel ) après avoir subi les opérations de sensibilisation et avoir été rendu conducteur. L'homme de métier comprendra que l'on peut travailler toute fibre ou tout fil, composite ou non, se prêtant aux opérations classiques de l'industrie textile, comme notamment le tissage, par exemple le tissage velours, et le tricotage.

On peut également envisager d'autres modes de dépôt du métal, autres que la voie électrochimique, avec les adaptations nécessaires qui sont à la portée de l'homme de métier.

Par exemple, on a pu opérer avec un fil constitué d'une fibre de verre rendue conductrice par un dépôt chimique de quelques microns de nickel.

On peut également travailler un trait ou lame métallique obtenue par voie métallurgique, ou obtenue par dépôt électrochimique sur un support synthétique. Ce produit peut être travaillé en l'état ou bien après une opération de vrillage pour former un produit tubulaire, et opérations analogues.

L'un des intérêts de l'invention est de pouvoir intégrer avec précision des éléments facilement destructibles, par exemple à la chaleur à basse température, comme de la viscose, ce qui permet de calibrer avec précision le vide du produit fini. En effet, de tels éléments, après leur disparition, laisseront un espace ou volume bien défini et que l'on peut calculer ou optimiser par des essais de routine. Ceci n'était pas possible avec les techniques antérieures, y compris celles utilisant les non-tissés.

A titre d'exemple d'opérations textiles que l'on peut effectuer pour réaliser le produit selon l'invention, on citera :
- le tissage velours de fils de nickel ( notamment de quelques centièmes de mm de diamètre) qui permet d'utiliser des fils de diamètres différents pour la pièce haute et la pièce basse, si on le souhaite, et de définir une densité de fils entre ces deux pièces : on obtient un squelette dont la pièce haute servira de retenue à la matière active, les fils entre les deux pièces de collecte d'électrons, et la pièce basse de tenue mécanique de l'ensemble et de transport des électrons vers les collecteurs. On obtient donc la possibilité de calibrer le pouvoir filtrant; le densité des fils permet par ailleurs de définir un pouvoir conducteur avec une bonne précision ;
- le tissage volumique avec plusieurs couches de trame, du type sangles ;
- le tricotage double fontes.

Dans un but économique, on réalisera de préférence ce produit dans la largeur de la machine standard. On élimine ensuite s'il y a lieu les fibres de construction, en effectuant par exemple un passage au four suivi d'une désoxydation du nickel sous atmosphère d'hydrogène ou autre méthode connue.

Un autre avantage décisif de l'invention est de fournir un produit que l'on peut découper à la dimension exacte souhaitée, même à partir d'un tissage en machine de largeur standard, et ceci avec des rives stables. La découpe est suivie si besoin est d'un collage ou d'une soudure des fils de chaque coté de la découpe.

Selon l'invention, une découpe au laser est possible, sous atmosphère neutre, un avantage du laser, outre sa très grande précision, étant de réaliser simultanément avec la découpe une opération de soudage ou collage des fils de rive ( donc sans étape supplémentaire ).

### EXEMPLE

On part d'un fil de viscose de 0,01 mm de diamètre, on réalise au total un dépôt de nickel de 2 microns d'épaisseur. Après traitement thermique comme cité précédemment, on obtient un tube de nickel de diamètre intérieur 0,01 mm et de diamètre extérieur 0,014 mm.

A partir d'un fil viscose de 0,15 mm de diamètre, on réalise un tube comme décrit précédemment avec une épaisseur de nickel de 4 microns. On obtiens un fil de diamètre intérieur 0,15 mm et de diamètre extérieur 0,158 mm.

Sur un métier velours sur lequel on a enlevé le couteau de découpe pièce haute, pièce basse, on prépare les fils de trame en 0,158 mm pour la pièce basse et en 0,014 mm pour la pièce haute.

On réalise alors un tissage avec un fil de chaîne de 0,158 mm pour la pièce basse et 0,014 mm pour la pièce haute et pour les fils de lien entre ces deux pièces. Les pièces haute et basse étant distantes de 1,3 mm, on réalise une densité de 4 fils / mm² entre lesdites deux pièces.

Le produit obtenu présente les caractéristiques suivantes :

| | |
|---|---|
| - Epaisseur totale : | 1,56 mm |
| - Grammage : | 500 g/m² |
| - Porosité de la pièce haute : tamis à maille de | 0,15 x 0,25 mm |
| - Volume disponible pour la matière active : | 96 % |

La présente invention couvre également tous les modes de mise en oeuvre voisins ou équivalents, notamment dans le choix des métaux, des méthodes de mise en oeuvre textile, de la composition des fils et notamment des fils composites, ainsi que les adaptations de routine en matière de procédé de mise en oeuvre, et toutes les applications, qui seront à la portée de l'homme de métier.

## Revendications

1. Produit utilisable comme support d'électrode de batterie, caractérisé en ce qu'il consiste en un produit textile obtenu à partir d'un fil d'au moins un élément actif, ou d'un fil ou d'une fibre textile revêtu d'au moins un tel élément, ou de composites obtenus à partir de tels fils et/ ou fibres.

2. Produit selon la revendication 1, caractérisé en ce qu'il consiste en fibres continues, notamment produit tissé ou tricoté, comportant ou incorporant du métal, notamment du nickel.

3. Produit selon la revendication 1 ou 2, caractérisé en ce que ledit élément actif est le nickel.

4. Produit selon la revendication 1, 2 ou 3, caractérisé en ce que les fils ou fibres textiles sont des fils de viscose.

5. Produit selon l'une quelconque des revendications 1 à 4 caractérisé en ce qu'il est obtenu par un procédé comportant au moins une étape de tissage ou de tricotage, de préférence en 3 dimensions ; et encore de préférence, de manière non homogène.

6. Produit selon l'une quelconque des revendications 1 à 4, caractérisé en ce qu'il est obtenu par un procédé comportant au moins une étape de tissage velours, ou de tissage volumique, ou de tricotage double fonte.

7. Produit selon la revendication 5 ou 6 caractérisé en ce qu'il est obtenu par un procédé comportant au moins une étape d'élimination des fibres de construction.

8. Produit selon l'une quelconque des revendications 1 à 7 caractérisé en ce qu'on utilise un fil ou un trait métallique, notamment de nickel, ou un fil textile par exemple de viscose revêtu d'une mince couche de nickel, ou encore des fils composites, ou en particulier un trait réalisé à partir d'un dépôt métallique sur un film synthétique, par exemple un dépôt de nickel sur un film de polyéthylène.

9. Procédé pour fabriquer un support d'électrode de batterie, caractérisé en ce que l'on traite par un procédé textile un fil d'au moins un élément actif, ou un fil ou une fibre textile revêtu d'au moins un tel élément, ou des composites obtenus à partir de tels fils et/ ou fibres.

10. Procédé selon la revendication 9, caractérisé en ce que ledit élément actif est le nickel.

11. Procédé selon la revendication 9 ou 10, caractérisé en ce que les fils ou fibres textiles sont des fils de viscose.

12. Procédé selon la revendication 9, 10 ou 11, caractérisé en ce qu'il comporte au moins une étape de tissage ou de tricotage, de préférence en 3 dimensions ; et encore de préférence, de manière non homogène.

13. Procédé selon la revendication 9, 10 ou 11, caractérisé en ce qu'il comporte au moins une étape de tissage velours, ou de tissage volumique, ou de tricotage double fonte.

14. Procédé selon l'une quelconque des revendications 9 à 13, caractérisé en ce qu'il comporte au moins une étape d'élimination des fibres de construction.

15. Support d'électrode de batterie, caractérisé en ce qu'il consiste en le produit selon l'une quelconque des revendications 1 à 8.

16. Support d'électrode de batterie, caractérisé en ce qu'il a été fabriqué par un procédé selon l'une quelconque des revendications 9 à 14.

17. Batteries caractérisées en ce qu'elles comportent au moins un support d'électrode selon la revendication 15 ou 16.

18. Batteries selon la revendication 15 caractérisées en ce qu'elles consistent en batteries rechargeables de tous types, depuis les batteries pour montre bracelet ou pour téléphones et autres dispositifs portables jusqu'aux batteries de démarrage pour l'industrie automobile et à la traction de véhicule automobiles.
